# EUROPEAN PATENT APPLICATION

(11) **EP 1 938 936 A1**
(43) Date of publication of application: **02.07.2008**
(21) Application number: 06821832.0
(22) Date of filing: 04.10.2006
(51) Int. Cl.: B29C 33/04, B29C 35/04, B29L 30/00

(54) **TIRE VULCANIZER**

(30) Priority: 05.10.2005 JP 2005292597
(71) Applicant: Ichimaru Giken Co., Ltd., Chikugo-shi, Fukuoka 833-0016 (JP)
(72) Inventor: ICHIMARU, Hironobu, Chikugo-shi, Fukuoka 833-0016 (JP)
(74) Representative: Ilgart, Jean-Christophe
(86) International application number: PCT/JP2006/320247
(87) International publication number: WO 2007/043550

(57) **Abstract**

The invention provides a tire vulcanizer having a vulcanizer body and a shaping unit and being able to accurately mount and shape a green tire in the shaping unit when shaping the green tire in the shaping unit as well as to accurately place a lower bead portion of the green tire in a lower container of the vulcanizer body when placing the shaping unit in the vulcanizer body. The tire vulcanizer with a vulcanizer body (A) and a shaping unit (B) is configured to include a lower bead support ring (23) to support a lower bead portion (C1) of the green tire (C) in a lower container (22) of the vulcanizer body.

## Description

### TECHNICAL FIELD

The present invention relates to a tire vulcanizer in which a green tire is shaped outside a vulcanizer body using a shaping unit and vulcanized in a state that the shaping unit is set in the vulcanizer body.

### BACKGROUND ART

In prior art tire vulcanization methods, for shaping a green tire, the outer circumference of a bladder is made in tight contact with the inner circumference of the green tire by setting the green tire is in a center mechanism of a vulcanizer and inflating the bladder of the center mechanism with a pressurized fluid.

Then, the bladder supplied with a high-temperature and pressure fluid is pressed into the inner circumference of the green tire held in a container of the vulcanizer, whereby the green tire is vulcanized by heat from the bladder and the container.

However, such a prior art tire vulcanization method has a problem that since the green tire is set in the center mechanism of the vulcanizer for shaping, pre-vulcanization processing takes a long time, causing a reduction in work efficiency.

In view of solving the above problem, in prior art there has been proposed a tire vulcanizer disclosed in Japanese Laid-open Patent Application Publication No. 2002-178333 which is configured to shape a green tire with a shaping unit outside a vulcanizer body and vulcanize the shaped green tire while the shaping unit is set in the vulcanizer body.

This prior art tire vulcanizer includes a shaping unit for off-line setup, that is, mounting a green tire outside the vulcanizer body and shaping the green tire.

Thus, the use of the shaping unit has an advantage of improved work efficiency since just setting in the vulcanizer body the green tire shaped outside enables immediate start of vulcanization.

In order to manufacture tires with high performance, however, it is essential not only to accurately mold the green tire but also to set the green tire in a container of the vulcanizer body accurately without positional and directional displacement.

Therefore, for shaping the green tire in the shaping unit, it is necessary to mount the green tire in the shaping unit accurately and shape it accurately as well as to accurately set a lower bead portion of the green tire in a lower container of the vulcanizer body when placing the shaping unit in the vulcanizer body.

In this regard, the prior art tire vulcanizer includes, in the outer periphery of a lower clamp ring as a component of the shaping unit, a bead support portion supporting the lower bead portion of the green tire.

With the bead support portion formed in the lower clamp ring, however, in light of mounting an easily deformable green tire on the shaping unit, it is not able to sufficiently deal with displacements of the green tire which may occur when the lower bead portion thereof is attached to the bead support portion.

Further, in order to mount the green tire, the upper clamp ring need be formed with a smaller outer diameter than an inner diameter of the green tire. Because of this, in the prior art a bead support member is attached to the outer periphery of the upper clamp ring after the mounting of the green tire, which requires a structure for detachment accordingly.

Furthermore, when the green tire is mounted, the bead support member is not yet attached to the upper clamp ring, therefore, only the lower bead portion is supported by the bead support portion of the lower clamp ring. Therefore, it is likely that the lower and upper bead portions cannot be supported with a same degree of stability, causing the green tire not to be mounted with sufficient accuracy.

In view of solving the above-identified problems, the present invention aims to provide a tire vulcanizer with a vulcanizer body and a shaping unit in which the green tire is accurately mounted and accurately shaped in the shaping unit and the lower bead portion of the green tire can be set accurately in the lower container of the vulcanizer body when the shaping unit is placed in a container thereof.

### DISCLOSURE OF THE INVENTION

In view of solving the above problems, a tire vulcanizer according to the present invention (claim 1) is configured to comprise a vulcanizer body having an upper container attached to a bolster plate and a lower container attached to a bottom plate, and a shaping unit in which a green tire is mounted outside the vulcanizer body and which is set in the vulcanizer body with the green tire mounted therein, in which the shaping unit includes a bladder made of inflatable tubular rubber, an upper clamp ring which fixes an upper end of the bladder, a lower clamp ring which fixes a lower end of the bladder, and a fluid port through which a pressurized fluid is supplied/discharged to/from an inside of the bladder; the upper and lower clamp rings are approachably/separably supported so that they are able to be positioned at a bladder extended position and at a shaping position, the bladder extended position being a position at which the upper and lower clamp rings are distanced away from each other so that an outer diameter of the bladder is to be smaller than an inner diameter of the green tire, the shaping position being a position at which the upper and lower clamp rings approach each other so that the outer circumference of the bladder is to be made in tight contact with the inner circumference of the green tire; the shaping unit is set in the vulcanizer body in a shaping state that the outer circumference of the bladder is made in tight contact with the inner circumference of the green tire by supplying a fluid to inside of the bladder from the fluid port and positioning the upper and lower clamp rings at the shaping position; and the lower container of the vulcanizer body has a lower bead support ring which has formed therein a fitting portion to fit in an inner periphery of a lower bead portion of the green tire when the shaping unit in the shaping state is set in the vulcanizer body.

Further, a tire vulcanizer according to the present invention (claim 2) is configured that in the tire vulcanizer according to claim 1, the upper container of the vulcanizer body has an upper bead support ring which has formed therein a fitting portion to fit in an inner periphery of an upper bead portion of the green tire when the shaping unit in the shaping state is set in the vulcanizer body.

### BRIEF DESCRIPTION OF THE DRAWINGS

FIG. 1 is a process drawing for describing a vulcanization method using a tire vulcanizer according to the present invention;
FIG. 2 is a process drawing for describing the vulcanization method using the tire vulcanizer according to the present invention;
FIG. 3 is a process drawing for describing the vulcanization method using the tire vulcanizer according to the present invention;
FIG. 4 is a process drawing for describing the vulcanization method using the tire vulcanizer according to the present invention;
FIG. 5 is a process drawing for describing operation of a shaping unit;
FIG. 6 is a process drawing for describing operation of the shaping unit;
FIG. 7 is a process drawing for describing operation of the shaping unit; and
FIG. 8 is a process drawing for describing another operation of a shaping unit.

### BEST MODE FOR CARRYING OUT THE INVENTION

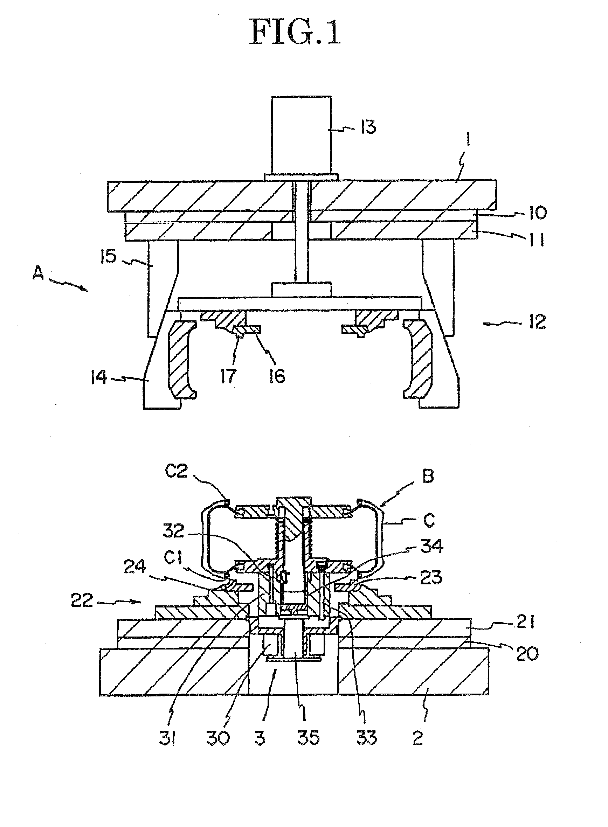

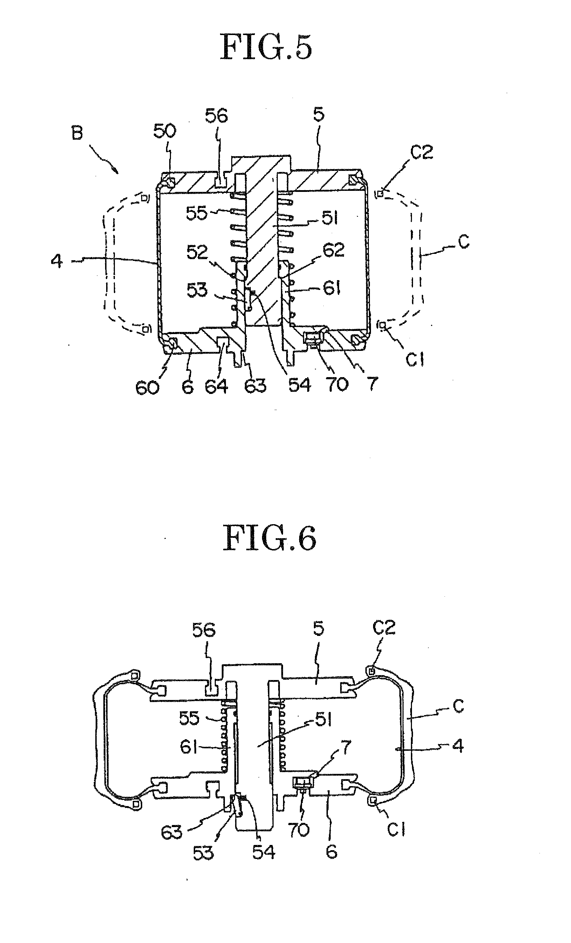

FIGs. 1 to 4 are process drawings for describing a vulcanization method using a tire vulcanizer according to the present invention. FIGs. 5 to 7 are process drawings for describing operation of the shaping unit.

A tire vulcanizer according to the present embodiment comprises a vulcanizer body A and a shaping unit B.

As shown in FIG. 1, the vulcanizer body A comprises an upper container 12 mounted in a bolster plate 1 via an insulator bolster 10 and a bolster platen 11, and a lower container 22 mounted in a bottom plate 2 via an insulator bottom 20 and a bottom platen 21. The bolster plate 1 and the bottom plate 2 are supported in such a manner as to relatively move in a vertical direction.

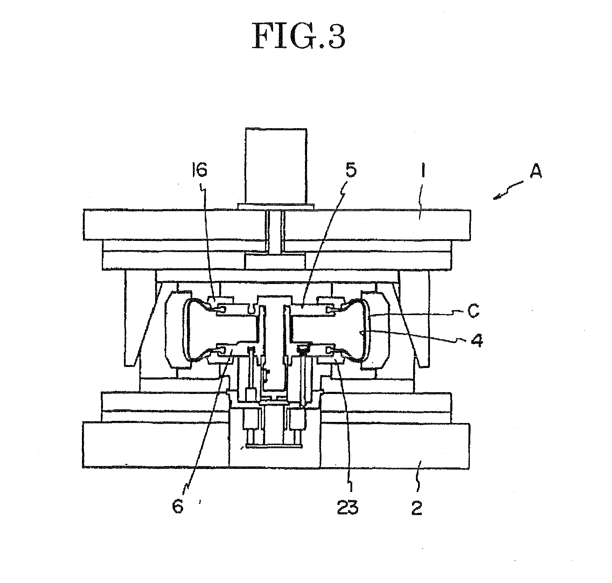

In the present embodiment, it is configured that the bottom plate 2 is fixed and the bolster plate 1 is elevated/descended by a not-shown cylinder body between an elevated position (shown in FIGs. 1, 2, 4) and a descended position (shown in FIG. 3).

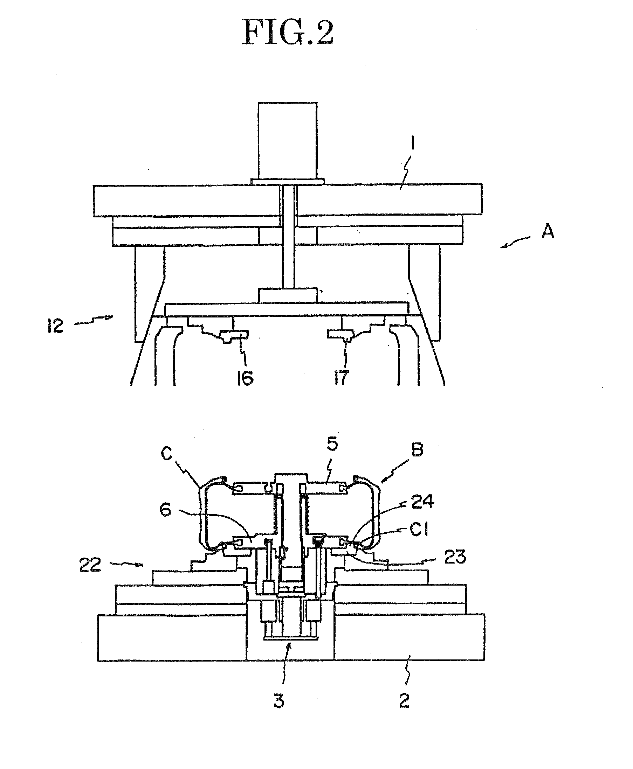

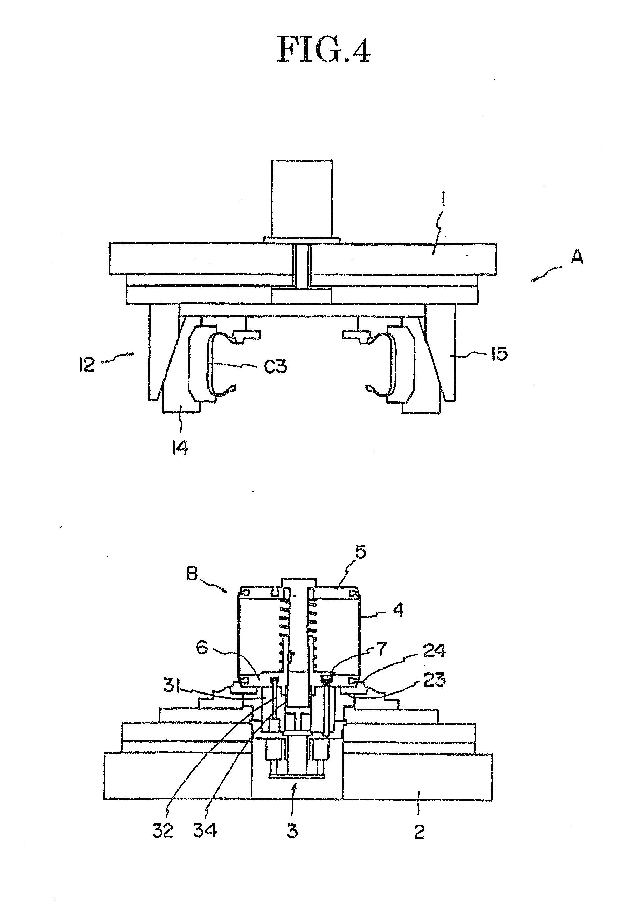

The upper container 12 has an elevation cylinder 13 mounted in the bolster plate 1. The elevation cylinder 13 has mounted therein a segment mold 14 which is divided into plural segments so that as the elevation cylinder 13 elevates or descends, the segment mold 14 expands or shrinks radially along an expandable guide 15 between an expanded position (shown in FIGs. 1, 2) and a shrunk position (shown in FIGs. 3, 4).

The lower container 22 is mounted on the bottom plate 2 to retain the shaping unit B with the segment mold 14, and provided with a lower bead support ring 23 at the upper end thereof.

The lower bead support ring 23 has, at an outer periphery, a later-described fitting portion 24 which fits in an inner periphery of a lower bead portion C1 of a green tire C when the shaping unit B in a shaping state is set in the vulcanizer body A.

Also, the upper container 12 has an upper bead support ring 16 which has formed therein a fitting portion 17 to fit in an upper bead portion C2 of the green tire C when the shaping unit B in a shaping state is set in the vulcanizer body A.

The center mechanism 3 is provided in the center of the lower container 22. The center mechanism 3 comprises a support plate 31 elevating/descending by the cylinder 30, a clamp rod 32 fixing the shaping unit B on the support plate 31, a fluid channel 33 communicated with a fluid port 7 of the shaping unit B, a lock release tube 34 which holds and retreats a later-described latch nail 53 to such a position as not to protrude from the outer circumference of an upper shaft 51, and a cylinder 35 which elevates/descends the lock release tube 34.

The green tire C is mounted in the shaping unit B outside the vulcanizer body A and the shaping unit B with the green tire C mounted thereon is set in the vulcanizer body A.

As shown in FIG. 5, the shaping unit B comprises a bladder 4 made of inflatable tubular rubber, an upper clamp ring 5 fixing an upper end of the bladder 4, a lower clamp ring 6 fixing a lower end of the bladder 4, and a fluid port 7 through which a pressurized fluid is supplied/discharged to/from the inside of the bladder 4.

The upper clamp ring 5 has a bladder fixation portion 50 in the outer periphery and the upper shaft 51 vertically placed in the center of the bottom surface while the lower clamp ring 6 has a bladder fixation portion 60 in the outer periphery and a lower tubular shaft 61 standing in the center of the top surface.

The upper and lower clamp rings 5, 6 are supported approachably/separably by the upper shaft 51' s slidably fitting in the lower tubular shaft 61.

In addition, the upper and lower clamp rings 5, 6 are latched at a bladder extended position (shown in FIG. 5) at which they are distanced away from each other so that the outer diameter of the bladder 4 is to be smaller than the inner diameter of the green tire C. They are latched at the bladder extended position by engaging a step portion 52 formed on the outer circumference of the upper shaft 51 with a step portion 62 formed on the upper end of the inner surface of the lower tubular shaft 61.

Further, the upper and lower clamp rings 5, 6 are latched at a shaping position (shown in FIG. 6) at which they approach each other so that the outer circumference of the bladder 4 is to be made in tight contact with the inner circumference of the green tire C.

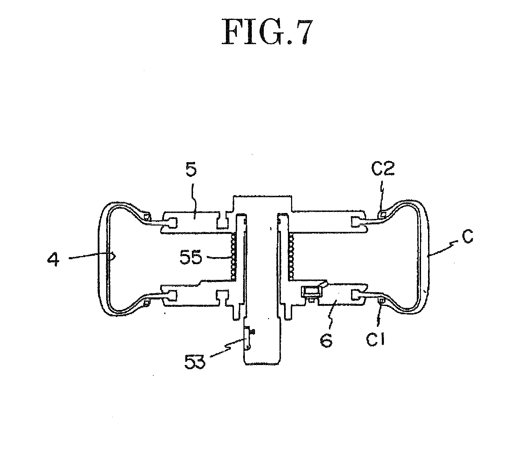

Here, the latch nail 53 attached to the upper shaft 51 is formed to advance/retreat between an engaged position at which it protrudes from the outer circumference of the upper shaft 51 (shown in FIG. 6) and a contained position at which it does not protrude therefrom (shown in FIGs. 5, 7). Meanwhile, a step portion 63 is formed on the lower end of the inner surface of the lower tubular shaft 61 to engage with the latch nail 53, thereby latching the upper and lower clamp rings 5, 6 at the shaping position.

Also, for vulcanization the upper and lower clamp rings are retained at a vulcanization position (shown in FIG. 7) at which they come closer to each other than the shaping position.

The latch nail 53 is generally biased by a spring 54 to protrude to the engaged position. When the latch nail 53 is positioned inside the lower tubular shaft 61 as shown in FIG. 5, it is retreated to a contained position, pushed by the lower tubular shaft 61, so that the upper shaft 51 and the lower tubular shaft 61 become slidable.

That is, the latch nail 53 advances to the engaged position from the contained position by using the sliding movement of the upper shaft 51 and the lower tubular shaft 61 along with the approaching/separating of the upper and lower clam rings 5, 6. This eliminates the necessity of a dedicated engaging mechanism for operation of the latch nail 53. Therefore, it is possible to simplify the structure thereof and to reliably position the shaping unit B at the shaping position.

Note that the provision of the spring 55 is not always needed although the spring 55 attached to the upper shaft 51 and the lower tubular shaft 61 is provided to generally bias the upper and lower clamp rings 5, 6 to distance away from each other and be positioned stably.

The fluid port 7 is provided in the lower clamp ring 6 (or upper clamp ring 5) at one or more positions, and incorporates a check valve to prevent a leakage of internal pressure so that it cannot discharge the pressurized fluid from the inside unless it is released externally.

In vulcanization, first the green tire C is mounted in the shaping unit B. Here, the shaping unit is latched at the bladder extended position at which the upper and lower clamp rings 5, 6 are distanced away from each other to engage the step portion 52 and the step portion 62 so that the outer diameter of the bladder 4 is to be smaller than the inner diameter of the green tire C, as shown in FIG. 5

Thereafter, the green tire C is fitted in the outer periphery of the bladder 4 while the shaping unit B is retained at the bladder extended position. Then, the shaping unit B is positioned at the shaping position by supply of the pressurized fluid from the fluid port 7 and the engagement of the latch nail 53 and the step portion 62 by bringing the upper and lower clamp rings 5, 6 closer to each other. This makes the outer circumference of the bladder 4 be in tight contact with the inner circumference of the green tire C as shown in FIG. 6 (referred to as shaping).

Since the lower bead portion C1 of thus-shaped green tire C is not supported, the green tire C is free from deformation caused by the lower bead portion C1 being supported. Accordingly, it is free from positional and directional displacements.

Next, after the green tire C is shaped by the shaping unit B as above, the shaping unit B is set in the vulcanizer body A to vulcanize the green tire C. when the shaping unit B is transferred from a working position (not shown) at which the green tire C is mounted therein to the vulcanizer body A by a transfer device, a clamp of the transfer device is locked with a clamp groove 56 of the upper clamp ring 5.

In this case, the bolster plate 1 of the vulcanizer body A is retained at the elevated position and the upper container 12 is retained at the expanded position, as shown in FIG. 1. Here, the shaping unit B is placed on the support plate 31 of the center mechanism 3 and the clamp rod 32 is locked with a clamp groove 64 of the lower clamp ring 6. At this point, the lower bead portion C1 of the green tire C is in a float state without being supported by the lower bead support ring 23.

Then, the support plate 31 of the center mechanism 3 is descended as shown in FIG. 2, so that the lower bead portion C1 of the green tire C is supported by the lower bead support ring 23 and that the shaping unit B is set to fit the fitting portion 24 into the inner periphery of the lower bead portion C1.

As described above, at setting the shaping unit B in the vulcanizer body A, the lower bead portion C1 of the green tire C is supported by the lower bead support ring 23 and the fitting portion 24 is fitted in the inner periphery of the lower bead portion C1, therefore, it is possible to set the green tire C accurately without positional and directional displacements of the lower bead portion.

After the shaping unit B is set in the lower container 22 of the vulcanizer body A as above, the bolster plate 1 of the vulcanizer body A is descended to a descended position and the upper container 12 is shrunk to a shrunk position, as shown in FIG. 3. This leads to holding the shaping unit B by the upper and lower containers 12, 22 at the vulcanization position (shown in FIGs. 3, 7) at which the upper and lower clamp rings 5, 6 come closer than the shaping position.

In this manner, the upper bead portion C2 of the green tire C is supported by the upper bead support ring 16 while the shaping unit B is set to fit the fitting portion 17 in the inner periphery of the upper bead portion C2.

Note that although the engagement of the latch nail 53 with the step portion 63 is released at the vulcanization position, no problem arises since the shaping unit B is held by the upper and lower container 12, 22.

The green tire C is vulcanized by high-temperature and pressure fluid supplied to inside of the bladder 4 from the fluid port 7 via the fluid channel 33 and heat from the containers 12, 22.

After the above vulcanization of the green tire C, as shown in FIG. 4, the fluid port 7 of the shaping unit B is opened to release the inner pressure with the upper container 12 kept shrunk.

Then, the engagement of the latch nail 53 with the step portion 63 is released by elevating the lock release tube 34 by the cylinder 35, and the shaping unit B is moved away to the extended position when the bolster plate 1 is elevated to the elevated position.

Here, a vulcanized tire C3 retained in the upper container 12 is elevated, removed from the upper container 12 by a not-shown tire fetch device, and carried to a not-shown cooling device.

The shaping unit B locked with the clamp rod 32 is released and removed while the support plate 31 of the center mechanism 3 is elevated, and it is cooled down or carried to the working position at which the green tire C is mounted.

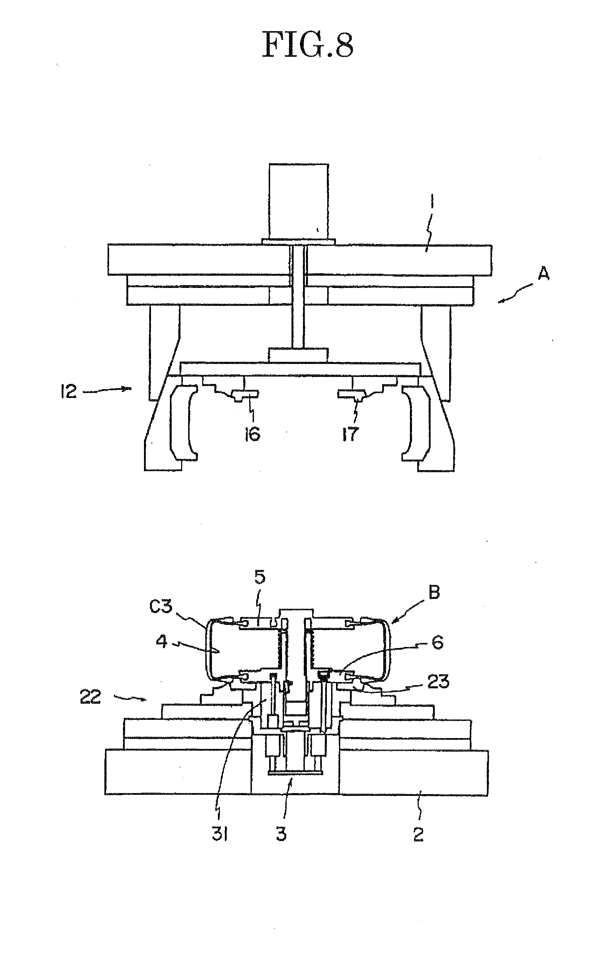

Further, FIG. 8 shows another example of the process after the vulcanization of the green tire C.

In this process, with the upper container 12 kept shrunk, the fluid port 7 of the shaping unit B is opened to release the inner pressure, and then the upper container 12 is expanded while the bolster plate 1 is elevated to the elevated position. At this point, the shaping unit B is returned from the vulcanization position to the shaping position, but the vulcanized tire C3 is still retained in the bladder 4.

Then, with the support plate 31 of the center mechanism 3 elevated, the shaping unit B locked with the clamp rod 32 is released and removed. The vulcanized tire C3 is removed from the shaping unit B and carried to the cooling device.

After the removal of the vulcanized tire C3, the shaping unit B is cooled down or carried to the working position to mount the green tire C. Alternatively, it can be configured that the shaping unit B with the vulcanized tire thereon is cooled down first, and then the vulcanized tire is removed. The shaping unit B without the vulcanized tire C3 is further cooled down or carried to the working position to mount the green tire C.

### INDUSTRIAL AVAILABILITY

The tire vulcanizer with the vulcanizer body and the shaping unit according to the present invention is configured to comprise, in the lower container of the vulcanizer body, the lower bead support ring to support the lower bead portion of the green tire (claim 1).

In other words, unlike the prior art tire vulcanizer, a bead support portion to support the lower bead portion of the green tire is not formed in the outer periphery of the lower clamp ring.

Thus, with such a configuration that the lower bead portion of the green tire is not supported in the shaping unit, the green tire is mounted in the shaping unit without the lower bead portion being supported. Accordingly, without being supported, the lower bead portion is free from deformation so that the green tire can be mounted and shaped accurately without displacements.

In addition, the shaping unit can be accurately set in the vulcanizer body without positional and directional displacements of the lower bead portion since the lower bead portion of the green tire is supported by the lower bead support ring and the fitting portion thereof is fitted into the inner periphery of the lower bead portion.

Also, the upper container of the vulcanizer body includes the upper bead support ring which has the fitting portion to fit into the inner periphery of the upper bead portion of the green tire (claim 2).

Because of this, the shaping unit can be accurately set in the vulcanizer body without positional and directional displacements of the upper bead portion since the upper bead portion of the green tire is supported by the upper bead support ring and the fitting portion thereof is fitted into the inner periphery of the upper bead portion.

Further, unlike the prior art tire vulcanizer, the upper and lower bead portions are supported with a same degree of stability, so that it is able to eliminate the displacement of the mounted green tire caused by the unbalanced support for the upper and lower bead portions thereof.

## Claims

1. A tire vulcanizer comprising a vulcanizer body having an upper container attached to a bolster plate and a lower container attached to a bottom plate, and a shaping unit in which a green tire is mounted outside the vulcanizer body and which is set in the vulcanizer body with the green tire mounted therein, the tire vulcanizer **characterized in that**:
the shaping unit includes a bladder made of inflatable tubular rubber, an upper clamp ring which fixes an upper end of the bladder, a lower clamp ring which fixes a lower end of the bladder, and a fluid port through which a pressurized fluid is supplied/discharged to/from an inside of the bladder;
the upper and lower clamp rings are approachably/separably supported so that they are able to be positioned at a bladder extended position and at a shaping position, the bladder extended position being a position at which the upper and lower clamp rings are distanced away from each other so that an outer diameter of the bladder is to be smaller than an inner diameter of the green tire, the shaping position being a position at which the upper and lower clamp rings approach each other so that the outer circumference of the bladder is to be made in tight contact with the inner circumference of the green tire;
the shaping unit is set in the vulcanizer body in a shaping state that the outer circumference of the bladder is made in tight contact with the inner circumference of the green tire by supplying a fluid to inside of the bladder from the fluid port and positioning the upper and lower clamp rings at the shaping position; and
the lower container of the vulcanizer body has a lower bead support ring which has formed therein a fitting portion to fit in an inner periphery of a lower bead portion of the green tire when the shaping unit in the shaping state is set in the vulcanizer body.

2. A tire vulcanizer according to claim 1,
**characterized in that**
the upper container of the vulcanizer body has an upper bead support ring which has formed therein a fitting portion to fit in an inner periphery of an upper bead portion of the green tire when the shaping unit in the shaping state is set in the vulcanizer body.
